(19) Europäisches Patentamt

European Patent Office

Office européen des brevets

(11) **EP 0 787 308 B1**

(12) **FASCICULE DE BREVET EUROPEEN**

(45) Date de publication et mention
de la délivrance du brevet:
**02.01.2003 Bulletin 2003/01**

(51) Int Cl.$^7$: **G01T 3/00**

(86) Numéro de dépôt international:
**PCT/FR95/01373**

(21) Numéro de dépôt: **95935979.5**

(22) Date de dépôt: **18.10.1995**

(87) Numéro de publication internationale:
**WO 96/012974 (02.05.1996 Gazette 1996/20)**

(54) **ENCEINTE D'IRRADIATION ET/OU DE COMPTAGE POUR ANALYSE PAR DETECTION NEUTRONIQUE**

BESTRAHLUNGS- UND/ODER ZÄHLKAMMER FÜR DIE NEUTRONENDETEKTIONSANALYSE

IRRADIATION AND/OR COUNTING CHAMBER FOR NEUTRON DETECTION ANALYSIS

(84) Etats contractants désignés:
**BE DE GB SE**

(30) Priorité: **19.10.1994 FR 9412468**

(43) Date de publication de la demande:
**06.08.1997 Bulletin 1997/32**

(73) Titulaire: **COMMISSARIAT A L'ENERGIE ATOMIQUE**
**75015 Paris (FR)**

(72) Inventeurs:
• **UMIASTOWSKI, Krzysztof**
**F-92190 Meudon (FR)**
• **LAINE, Frédéric**
**F-78310 Maurepas (FR)**
• **LYOUSSI, Abdallah**
**F-83560 Vinon sur Verdon (FR)**

(74) Mandataire: **Poulin, Gérard et al**
**BREVALEX**
**3, rue du Docteur Lancereaux**
**75008 Paris (FR)**

(56) Documents cités:
**EP-A- 0 042 099**     **EP-A- 0 511 109**
**US-A- 5 278 417**

• **PATENT ABSTRACTS OF JAPAN vol. 008 no. 065 (P-263) ,27 Mars 1984 & JP,A,58 211682 (NIPPON GENSHIRYOKU JIGYO KK;OTHERS: 01) 9 Décembre 1983,**

**Description**

Domaine technique

L'invention se rapporte au domaine du dosage des émetteurs α dans les déchets solides, dans le but de connaître de manière non destructive les quantités de certains éléments (par exemple, les actinides) contenus dans ce type de déchet. Plus précisément, elle se rapporte à une enceinte pour l'irradiation des déchets et le comptage de neutrons émis après irradiation dudit déchet. Elle trouve une application directe dans les installations utilisant les techniques de dosages neutroniques et/ou photoniques actives ou passives. En particulier, le dosage des émetteurs α dans les déchets solides permet de les classer, de comptabiliser l'activité α stockée ou d'effectuer un bilan de la matière fissile. Cette analyse est une étape capitale de tout programme de gestion des déchets radioactifs.

Etat de la technique

Dans le but de connaître de manière non destructive la quantité d'actinide contenue dans un déchet, plusieurs méthodes de mesure ont été étudiées, parmi lesquelles on trouve la méthode d'interrogation photonique par le biais de photons de freinage ("Bremsstrahlung"). Ainsi, un faisceau de photons de Bremsstrahlung émanant, en général, d'un accélérateur linéaire d'électrons pulsés est utilisé. Ces photons énergétiques induisent des réactions de photofission sur les noyaux lourds présents dans le déchet. La mesure repose sur la détection des neutrons prompts et/ou retardés de photofission. Cette technique permet de déterminer les quantités d'éléments fissiles et fertiles contenus dans le déchet à doser. Elle est décrite dans l'article de A. LYOUSSI et al., intitulé "Low level transuranic waste assay by photon interrogation and neutron counting", Institute of Nuclear Material and Massagement (INMM), 34th Annual Meeting, 18-21 Juillet 1993, Scottsdale, Arizona.

De manière générale, deux techniques de mesure sont utilisables :

- irradiation à basse énergie et comptage des neutrons prompts de photofission,
- irradiation à haute énergie suivie du comptage des neutrons retardés de photofission.

La première technique présente l'avantage d'une bonne statistique. Cependant, les réactions (γ, n) de production de photoneutrons sur différents éléments, autres que les transuraniens produisent un signal parasite croissant avec l'énergie des photons. Il en résulte la nécessité de travailler à des énergies gamma relativement faibles. Cela a pour effet de réduire le nombre de réactions utiles, la section efficace de photofission étant une fonction croissante de l'énergie du photon incident. Ceci limite le comptage du signal prompt dont l'intensité décroît en quelques centaines de microsecondes.

La deuxième technique est, en principe, insensible aux photoneutrons instantanés parasites. En effet, elle repose sur le comptage de neutrons retardés.

Les premières mises en oeuvre de cette deuxième technique ont montré une composante neutronique persistant longtemps après l'impulsion photonique. En effet, les neutrons ou plutôt les photoneutrons naissant au sein de la cible de conversion sont diffusés par les molécules d'air puis ils rebondissent sur les murs en béton et les matériaux de la structure environnante. Les dimensions typiques d'une salle dans laquelle ce type de mesure est effectué sont en général suffisamment grandes pour que ces neutrons subissent un effet analogue à celui d'une balle de ping-pong sur une table de jeu et, par conséquent, leur durée de vie est non négligeable ; elle est trouvée égale à environ 5 millisecondes. Le signal retardé utile se trouve donc noyé dans ce signal photoneutronique parasite.

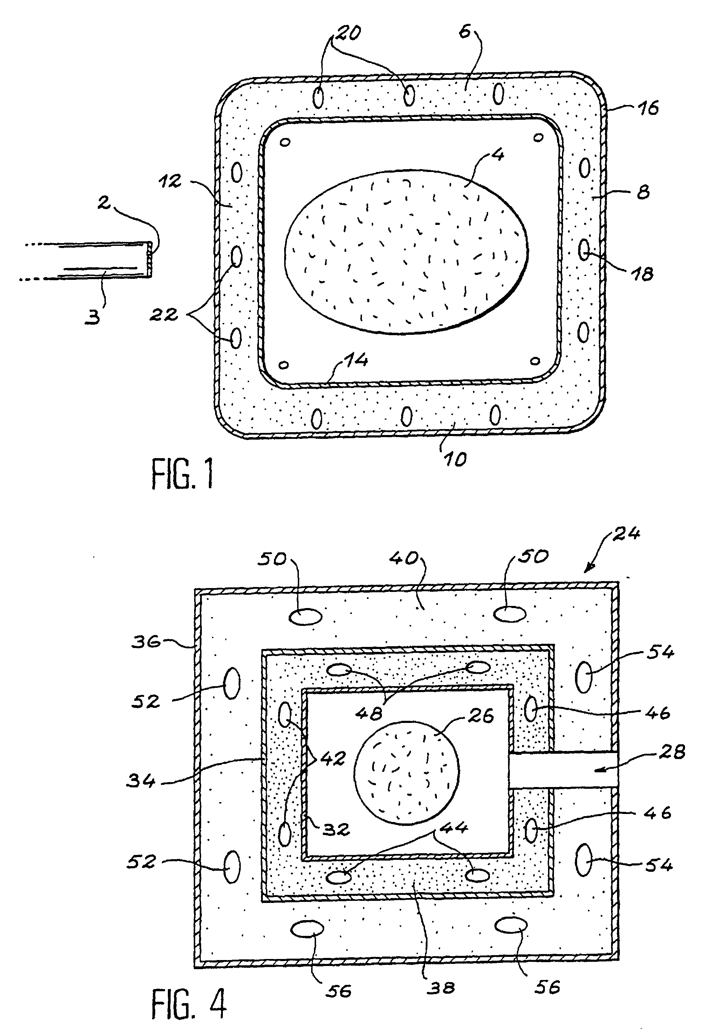

Un premier dispositif a été proposé, qui permet d'améliorer les performances de la méthode. Ce dispositif est décrit dans la publication citée ci-dessus. Brièvement, comme illustré sur la figure 1, il comporte une cible 2 placée sur le trajet d'un faisceau d'électrons 3. La collision électrons-cible permet de produire le rayonnement de Bremsstrahlung. Les déchets 4 sont contenus dans une enceinte dont la paroi 6, 8, 10, 12 est constituée par exemple de polyéthylène, compris entre deux revêtements 14, 16 de cadmium. La paroi contient en outre des détecteurs ${}^3$He pour compter les neutrons.

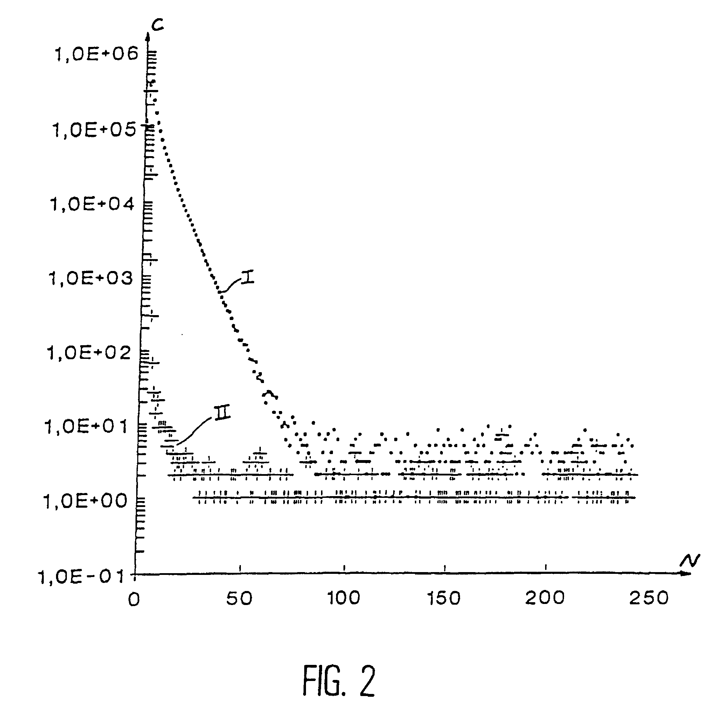

Il est possible d'identifier l'influence du cadmium en réalisant un enregistrement, en fonction du temps, des neutrons (γ, n) par un bloc compteur avec et sans cadmium. Ces résultats sont illustrés sur la figure 2 par les courbes I (taux de comptage sans cadmium) et II (taux de comptage avec cadmium), et il apparaît que la protection des blocs compteurs par du cadmium permet une réduction du bruit de fond d'environ un facteur 30.

L'ambiance neutronique parasite est à prédominance thermique. Cependant, ce type d'appareil est utilisé dans des halls accélérateurs de grande géométrie, et par conséquent, la thermalisation des photoneutrons prend des temps très longs. Par conséquent, aux instants de comptage du signal utile, il subsiste une ambiance neutronique épicadmique (photoneutrons thermalisés d'énergie supérieure à 0,417eV) pour laquelle la protection en cadmium reste inefficace.

Une enceinte d'irradiation correspondant à la revendication 1 est décrite dans le document EP-A-0 042 099.

Exposé de l'invention

La présente invention cherche à résoudre le problème mentionné ci-dessus.

Plus précisément, elle a pour objet une enceinte de comptage selon la revenctication 1.

Ainsi, cette enceinte comporte des protections constituées d'une part de plusieurs couches de modérateurs de neutrons et, d'autre part, d'un blindage de plusieurs couches de cadmium.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1, déjà décrite, illustre schématiquement une enceinte de tir-comptage selon l'art antérieur,
- la figure 2, déjà décrite, montre un enregistrement, en fonction du temps, de neutrons (γ, n) par un bloc compteur, avec et sans cadmium,
- les figures 3 et 4 sont respectivement une vue éclatée, en perspective, et une vue en coupe d'une enceinte de tir et de comptage selon l'invention.

Description détaillée de modes de réalisation de l'invention

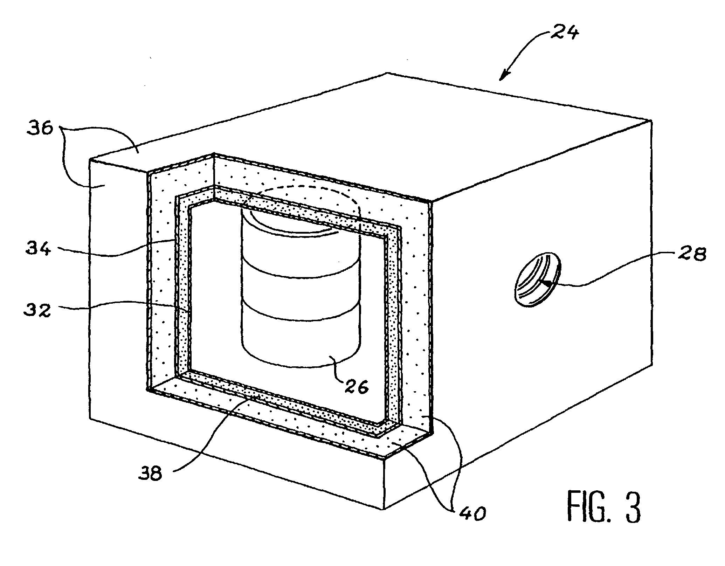

La figure 3 est une vue éclatée en perspective d'un mode de réalisation de l'invention. Sur cette figure, la référence 24 désigne l'enceinte de tir-comptage. Cette dernière comporte une paroi cubique, dont trois faces sont visibles sur la figure 3. Dans le cas de mise en oeuvre d'une méthode de mesure active, l'une de ces faces comporte une fenêtre 28 destinée à laisser passer un faisceau photonique, par exemple un faisceau de Bremsstrahlung (rayonnement de freinage) qui est ensuite dirigé vers un conteneur de déchets 26 introduit à l'intérieur de l'enceinte. Les méthodes d'interrogation passive ne nécessitent pas une telle fenêtre. La référence 32 désigne une protection interne de cadmium, qui recouvre intégralement la surface interne de la paroi de l'enceinte. Derrière cette protection interne de cadmium se trouvent successivement une couche 38 de modérateur, constituée par exemple de polyéthylène, de paraffine ou d'eau, et une protection intermédiaire 34 de cadmium, qui recouvre toute la surface extérieure du modérateur interne 38. Une couche de modérateur externe 40 fait suite à la couche 34. Ce modérateur externe est lui aussi constitué par exemple de polyéthylène, paraffine ou eau. Cette couche de modérateur externe est enveloppée dans une protection externe de cadmium 36.

Ainsi qu'illustré sur la figure 4, où des références identiques à celles de la figure 3 désignent les mêmes éléments, des détecteurs 42, 44, 46, 48 à neutrons du type détecteurs à ³He sont placés dans la couche 38 de modérateur. Ces détecteurs permettent le comptage du signal retardé de photofission. Ils sont en général optimisés de manière connue par ailleurs, pour avoir une sensibilité optimale à une énergie donnée, par exemple 400keV.

Ces détecteurs sont reliés aux alimentations nécessaires à leur fonctionnement et à des moyens de mesure et de traitement des signaux, extérieurs à l'enceinte de comptage et non représentés sur les figures.

Pour un photoneutron externe (c'est-à-dire tout neutron provenant d'une réaction (γ, n) sur les matériaux constituant le local d'expérimentation) deux situations peuvent se présenter :

- ou il est épicadmique, c'est-à-dire d'énergie supérieure à 0,417eV ; dans ce cas, ce neutron est capable de franchir la barrière externe de cadmium 36 pour se trouver dans la tranche externe de modérateur 40. Il sera donc ralenti dans la couche 40 de modérateur pour finalement passer en-dessous de l'énergie de coupure du cadmium. De cette façon, il sera absorbé dans la seconde enveloppe de cadmium 34.
- ou bien il n'est pas épicadmique, c'est-à-dire qu'il possède une énergie inférieure à 0,417eV. Dans ce cas, le photoneutron ne dépasse pas l'enveloppe externe 36 de cadmium.

Pour ce qui est des photoneutrons internes à l'enceinte, c'est-à-dire des photoneutrons naissant à la suite de l'interaction des photons avec la matrice d'enrobage du déchet, ils sont, si leur énergie le leur permet, détectés par les détecteurs 42, 44, 46, 48 pour le comptage des neutrons retardés de photofission. Cette détection a lieu à des instants tels que l'interférence avec le signal retardé utile n'a aucune chance de survenir. Dans le cas contraire, c'est-à-dire si l'énergie de ces photoneutrons internes est supérieure à l'énergie moyenne des neutrons retardés, ils se retrouveront dans la tranche externe 40 de modérateur. Grâce à la protection 34, de cadmium, ces neutrons auront une très faible probabilité de rétrodiffusion vers les détecteurs 42-48. Etant donné que l'énergie moyenne des photoneutrons est égale à environ 3MeV, c'est ce dernier scénario qui est le plus fréquent.

Le dernier cas de figure concerne les photoneutrons parasites internes et/ou externes se trouvant dans l'enceinte et dont l'énergie est inférieure à l'énergie de coupure du cadmium. Ces neutrons sont absorbés par la couverture interne 32 de cadmium.

Grâce à cette enceinte, le signal parasite dû aux neutrons instantanés de réaction (γ, n) sera d'une part réduit par les protections de cadmium et les deux tranches de modérateur et, d'autre part, la durée de vie moyenne de ce signal diminuera vu les faibles dimensions de l'enceinte comparées aux dimensions du hall accélérateur. Les calculs Monte-Carlo de transport neutronique donnent une demi-vie d'environ 100 μs pour des neutrons d'énergie moyenne de 2MeV évoluant dans un bloc modérateur. Cette durée de vie dépend de la géométrie et du matériau modérateur, mais l'ordre de grandeur reste valable.

Par ailleurs, des compteurs à neutrons 50, 52, 54, 56 sont disposés dans l'enceinte modératrice externe 40. Ces compteurs peuvent servir de moniteurs pour le bruit de fond photoneutronique. Ils permettent la mesure en ligne du signal parasite. En effet, un choix judicieux des épaisseurs modératrices permet à ces détecteurs de recueillir une grande partie des photoneutrons parasites internes. Un coefficient de proportionnalité conduit à la connaissance du bruit de fond survenant dans l'unité de mesure du signal retardé utile. Le signal parasite ainsi mesuré peut être soustrait du signal utile lors du traitement des données. Des mesures peuvent également être réalisées avec une seule série de détecteurs, situés dans la couche intérieure du modérateur.

La couche extérieure 40 de modérateur arrête les photoneutrons (extérieurs) ayant un certain spectre d'énergie.

La couche intérieure 38, elle, laisse passer des photoneutrons (intérieurs) d'énergie supérieure à l'énergie moyenne des neutrons utiles.

Du fait des ordres de grandeur des énergies mises en jeu, l'épaisseur de la couche intérieure de modérateur sera inférieure à celle de la couche extérieure. Il suffit en fait d'adapter l'épaisseur de chaque couche aux gammes d'énergie mises en jeu, ce que l'homme du métier peut aisément réaliser par essais successifs. Ainsi, par exemple, pour des neutrons extérieurs d'énergie 2MeV, une épaisseur de la couche extérieure 40 de l'ordre de 15cm de polyéthylène est suffisante. Si l'énergie varie en plus ou en moins autour de la valeur de 2MeV, il suffira de faire varier l'épaisseur correspondante dans le même sens.

La couche de cadmium, elle, a une épaisseur comprise entre 0,5 et 2 mm.

Par conséquent, l'enceinte selon l'invention permet d'assurer une triple fonction. La première consiste à isoler le produit à éclairer (le déchet radioactif et sa matrice d'enrobage 26) de l'ambiance photoneutronique parasite externe. La deuxième fonction est la séparation de signaux neutroniques de différentes énergies. Enfin, la troisième fonction est la réduction des temps de vie de neutrons parasites afin d'éviter leur interférence avec le signal retardé utile.

L'invention permet notamment de détecter et d'éliminer, dans le signal utile, la composante "tardive" des neutrons parasites de haute énergie, ou plutôt d'énergie supérieure à l'énergie moyenne des neutrons retardés. L'invention a été décrite dans le cas d'une enceinte de forme cubique. en fait, elle peut être plus généralement de forme quelconque, par exemple parallélépipédique ou sphérique, le volume intérieur étant adapté au volume des objets à tester.

Avec le dispositif selon l'invention, il est possible d'améliorer considérablement le rapport signal sur bruit. Ainsi, des mesures réalisées avec un modérateur interne 38 d'épaisseur 5cm, un modérateur externe 40 d'épaisseur 12,5cm, des revêtements de cadmium d'épaisseur environ 1,5mm ont permis d'atteindre les rapports $\frac{S}{B}$ suivants :

- déchets non enrobés : $\frac{S}{B} \approx 190$,
- déchets enrobés de polyéthylène (équivalent au bitume) : $\frac{S}{B} \approx 104$,
- déchets enrobés de verre (cas des déchets vitrifiés ou dans des colis bétonnés) : $\frac{S}{B} \approx 101$.

Par ailleurs, il est possible d'optimiser les épaisseurs de matériaux ralentisseurs de façon à obtenir un rapport $\frac{S}{B}$ supérieur à 200.

Dans la description précédente, les détecteurs de neutrons sont disposés dans la couche interne du modérateur. Toutefois, l'invention inclut des modes de réalisation, dans lesquels les détecteurs sont placés à l'intérieur de l'enceinte elle-même.

Dans un premier cas, on utilise des détecteurs nus aptes à détecter les neutrons thermiques. Dans un second cas, on entoure ces détecteurs d'une couche de modérateur, par exemple en polyéthylène, et d'une couche de cadmium, et l'on détecte les neutrons rapides.

Enfin, on ne sortirait pas du cadre de l'invention si l'on remplaçait le cadmium par un matériau absorbant efficace des neutrons thermiques ou épithermiques.

Les applications potentielles de l'invention se résument comme suit :

    1) - Interrogation combinée neutrons-photons.
    2) - Détermination du taux d'humidité dans les poudres de plutonium.
    3) - Contrôle des éléments fissiles et fertiles dans les installations nucléaires de base.
    4) - Détection de la matière lourde (fissile ou fertile) dans les zones de fût (gares, aéroports, ports,...).
    5) - Détection des explosifs.

Ces applications utilisent les méthodes d'interrogation actives, ou passives dans les cas 2), 3). Dans le cas des méthodes actives, il faut prévoir, dans la paroi de l'enceinte de mesure, une fenêtre de passage du faisceau d'excitation.

## Revendications

1. Enceinte (24) de comptage pour la détection de neutrons retardés (42, 44, 46, 48) comprenant au moins un détecteur de neutrons retardés, une paroi extérieure et un espace intérieur destiné à recevoir un objet à tester, la paroi comprenant successivement un premier revêtement interne (32) de cadmium, une couche interne (38) de modérateur dans laquelle sont placés le ou les détecteurs de neutrons retardés (42, 44, 46, 48), un deuxième revêtement (34) de cadmium et une couche externe de modérateur (40), **caractérisée en ce qu'**elle comprend une couche externe (36) de cadmium recouvrant 1a couche externe de modérateur (40), et **en ce que** la couche externe de modérateur (40) comprend un ou plusieurs détecteurs de neutrons (50, 52, 54, 56), les épaisseurs de la couche interne (38) de modérateur et de la couche externe de modérateur (40) étant choisies de façon que les détecteurs de neutrons (50, 52, 54, 56) placés dans la couche externe de modérateur (40) recueillent les neutrons parasites internes.

2. Enceinte d'irradiation et de comptage selon la revendication 1, **caractérisée par** la présence dans la paroi d'une fenêtre (28) pour le passage d'un faisceau de rayonnement d'excitation.

3. Enceinte selon l'une des revendications 1 à 2, le ou les détecteurs de neutrons étant du type à hélium-3($^3$He).

## Patentansprüche

1. Zählkammer (24) zur Detektion verzögerter Neutronen (42, 44, 46, 48) mit wenigstens einem Detektor verzögerter Neutronen, einer Außenwand und einem Innenraum, bestimmt zur Aufnahme eines zu untersuchenden Gegenstands, wobei die Wand sukzessive einen ersten Cadmium-Innenüberzug (32), eine Moderator-Innenschicht (38), in der der Detektor oder die Detektoren verzögerter Neutronen (42, 44, 46, 48) vorgesehen sind, einen zweiten Cadmiumüberzug (34) und eine Moderator-Außenschicht (40) umfasst,
**dadurch gekennzeichnet,**
**dass** sie eine Cadmium-Außenschicht (36) umfasst, die die Moderator-Außenschicht (40) bedeckt, und dadurch, dass die Moderator-Außenschicht (40) einen oder mehrere Elektronendetektoren (50, 52, 54, 56) umfasst, wobei die Dicken der Moderator-Innenschicht (38) und der Moderator-Außenschicht (40) so gewählt werden, dass die in der Moderator-Außenschicht (40) angeordneten Neutronendetektoren (50, 52, 54, 56) die parasitären internen Neutronen abfangen.

2. Bestrahlungs- und Zählkammer nach Anspruch 1, **dadurch gekennzeichnet, dass** in der Wand ein Fenster (28) für den Durchgang eines Erregerstrahlbündels vorgesehen ist.

3. Kammer nach einem der Ansprüche 1 und 2, wobei der oder die Neutronendetektoren vom Helium-3($^3$He)-Typ sind.

## Claims

1. Counting enclosure (24) for the detection of delayed neutrons (42, 44, 46, 48) comprising at least one delayed neutron detector, an outer wall and an inner wall for receiving an object to be tested, the wall successively comprising a first, inner cadmium coating (32), an inner moderator coating (38) in which are placed the delayed neutron detector or detectors (42, 44, 46, 48), a second cadmium coating (34) and an outer moderator coating (40), **characterized in that** it comprises an outer cadmium coating (36) covering the outer moderator coating (40) and **in that** the outer moderator coating (40) comprises one or more neutron detectors (50, 52, 54, 56), the thicknesses of the inner moderator coating (38) and the outer moderator coating (40) being chosen in such a way that the neutron detectors (50, 52, 54, 56) placed in the outer moderator coating (40) collect the inner parasitic neutrons.

2. Irradiation and counting enclosure according to claim 1, **characterized by** the presence in the wall of a window (28) for the passage of an exciting radiation beam.

3. Enclosure according to either of the claims 1 and 2, the neutron detector or detectors being of the helium-3($^3$He) type.

FIG. 1

FIG. 4

FIG. 2

FIG. 3